# FASCICULE DE BREVET EUROPEEN

(11) **EP 3 101 309 B1**
(45) Date de publication et mention de la délivrance du brevet: **03.01.2018**
(21) Numéro de dépôt: 16169720.6
(22) Date de dépôt: 13.05.2016
(51) Int. Cl.: F16F 15/129

(54) **DISQUE D'EMBRAYAGE**
KUPPLUNGSSCHEIBE
CLUTCH DISC

(30) Priorité: 01.06.2015 FR 1554971
(43) Date de publication de la demande: 07.12.2016
(73) Titulaire: Valeo Embrayages, 80009 Amiens Cedex 2 (FR)
(72) Inventeur: DAEL, Dominique, 76870 GAILLEFONTAINE (FR); MARECHAL, Olivier, 80000 LAHOUSSOYE (FR)
(74) Mandataire: Cardon, Nicolas

(56) Documents cités:
- DE-A1-102010 049 929
- FR-A1- 2 574 014
- KR-B1- 101 448 113

## Description

L'invention se rapporte à un perfectionnement des disques d'embrayage de véhicule automobile.
Le disque d'embrayage peut être intégré à un embrayage apte à relier sélectivement le moteur thermique à la boîte de vitesses, afin de filtrer les vibrations dues aux acyclismes du moteur. En variante, dans une telle application, le disque d'embrayage peut être intégré à un convertisseur de couple hydrodynamique.
Généralement, pour réduire le niveau des vibrations générées par les irrégularités de fréquence de rotation du volant moteur, on utilise des moyens d'amortissement en torsion associés à des moyens de frottement internes.
Ces moyens sont intégrés au disque d'embrayage qui est formé de l'assemblage d'un flasque d'entraînement et d'un flasque d'appui ou de guidage montés sur un moyeu et qui porte les garnitures périphériques de friction.
La recherche d'un fonctionnement optimal de l'embrayage passe donc par une analyse de la fonction d'amortissement en torsion qui permet de définir les valeurs de raideur progressive des moyens d'amortissement et d'assurer un contrôle fiable du coefficient de frottement.
De tels moyens d'amortissement sont généralement du type comprenant, d'une part, un premier jeu de ressorts hélicoïdaux formant les moyens d'amortissement principal dits de charge, logé dans le flasque d'entraînement du disque et, d'autre part, un second jeu de ressorts hélicoïdaux, de plus faibles dimensions, formant les moyens dits pré-amortisseurs ou de faible charge, monté sur un voile central de support fixé à l'intérieur du disque.
Les moyens de frottement comprennent, quant à eux, un composant métallique de friction constitué d'une rondelle coaxiale montée de façon intercalaire entre le voile et le flasque d'appui ou de guidage.

### EXPOSÉ DE L'INVENTION

Ce composant de friction permet de moduler le système d'hystérésis en fonction des spécifications de chaque constructeur automobile sans qu'il soit nécessaire de modifier ou d'adapter la structure des moyens amortisseurs du disque.
Toutefois, la présence de cette rondelle intercalaire participe de l'encombrement général du disque que les évolutions techniques tendent à vouloir réduire, notamment, pour ajuster au plus près la position axiale du disque relativement au volant moteur.

Dans le mode de réalisation du brevet KR 101448113, il est prévu de réaliser des bossages internes sur le flasque d'appui ou de guidage du disque. Ces bossages réalisés par emboutissage sont destinés à venir en contact de friction avec le voile.
Cependant, cette solution impose une modification substantielle du flasque et donc de la structure du disque si une adaptation du système d'hystérésis est nécessaire, ce qui est souvent le cas du fait des spécifications propres aux différents constructeurs.

L'invention vise à remédier à ces problèmes techniques en proposant de s'affranchir de la rondelle de friction tout en gardant la flexibilité d'adaptation du système d'hystérésis.

Ce but est atteint, selon l'invention, par un disque d'embrayage formé de l'assemblage d'un flasque d'entraînement et d'un flasque d'appui, d'un moyeu central et de garnitures de friction périphériques et à l'intérieur duquel est disposé au moins un amortisseur monté sur un voile central de support, caractérisé en ce que le voile central est pourvu, sur une de ses faces, d'au moins un bossage destiné à venir directement en contact de friction avec le flasque d'appui.

Selon une première variante avantageuse, le bossage est réalisé par emboutissage de la face du voile sur une zone circulaire située radialement sur le plan intérieur du voile et autour du moyeu.

Selon une caractéristique avantageuse, le bossage est ménagé sur la face du voile en regard du flasque d'appui.

Selon une autre caractéristique avantageuse, le bossage est réalisé dans l'épaisseur du voile.

Selon encore une autre caractéristique, le voile central est pourvu d'autres cavités aptes à recevoir d'autres ressorts, lesdites autres cavités étant situées radialement à l'extérieur du bossage.

De préférence, le bossage présente un bord intérieur rectiligne et un bord extérieur curviligne.

Selon encore une autre variante, ledit bossage présentent un bord intérieur et un bord extérieur curvilignes.

Selon encore une autre caractéristique, le bossage présente une section transversale tronconique.

Selon une variante spécifique, le voile comporte quatre bossages dont la longueur angulaire est comprise entre 30° et 60°.

Selon encore une autre caractéristique, le voile comporte un embouti circulaire au moins partiellement continu.

Selon encore une autre caractéristique, le voile comporte des cavités aptes à recevoir des ressorts, lesdites cavités étant situées radialement à l'extérieur du ou des bossages.

Un autre objet de l'invention est un composant pour système de transmission d'un véhicule automobile, le composant étant notamment un embrayage à disque ou un convertisseur de couple hydrodynamique, comprenant un disque d'embrayage comme précédemment décrit.

Les perfectionnements apportés au niveau du voile permettent de faire l'économie d'un composant de friction et de réduire, en conséquence, la largeur de l'ensemble du disque pour pouvoir ajuster ainsi la position axiale du volant moteur au plus près des garnitures de friction.

### BREVE DESCRIPTION DES FIGURES

D'autres caractéristiques et avantages de l'invention ressortiront à la lecture de la description qui va suivre, en référence aux figures annexées et détaillées ci-après.
La figure 1 représente une vue d'ensemble éclatée du disque de friction d'un mécanisme d'embrayage avec ses composants traditionnels.
Les figures 2A et 2B représentent des vues en demi-coupe, respectivement, d'un disque d'embrayage traditionnel selon la figure 1 et d'un mode de réalisation de disque perfectionné et modifié selon l'invention.
Les figures 3A et 3B représentent des vues, respectivement, de face et de dos d'un détail du mode de réalisation du disque de la figure 2B.
Pour plus de clarté, les éléments identiques ou similaires sont repérés par des signes de référence identiques sur l'ensemble des figures.

### DESCRIPTION DÉTAILLÉE DE MODES DE REALISATION

Naturellement, les modes de réalisation illustrés par les figures présentées ci-dessus ne sont donnés qu'à titre d'exemples non limitatif. Il est explicitement prévu que l'on puisse combiner entre eux ces différents modes pour en proposer d'autres.

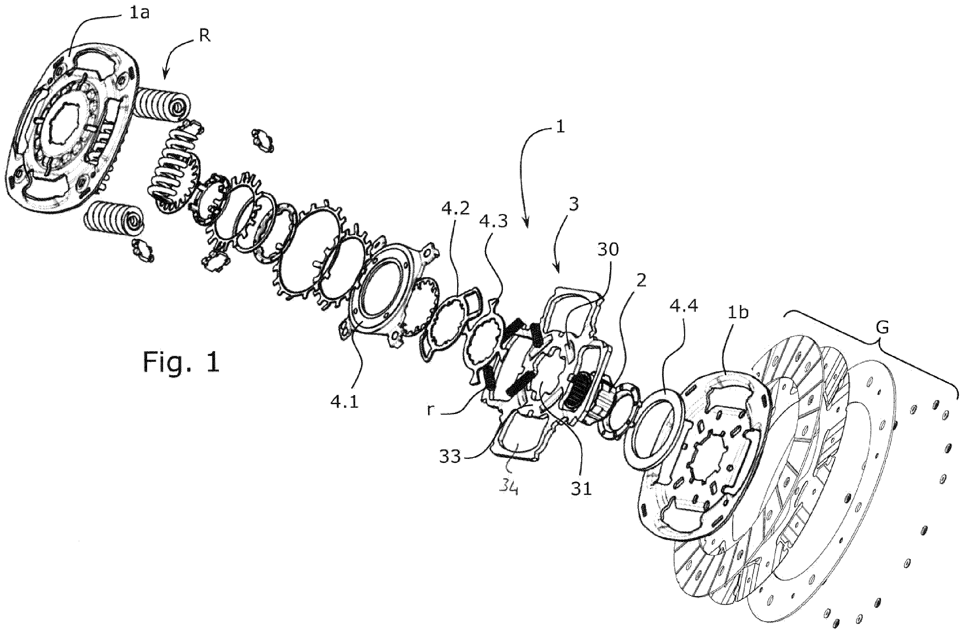

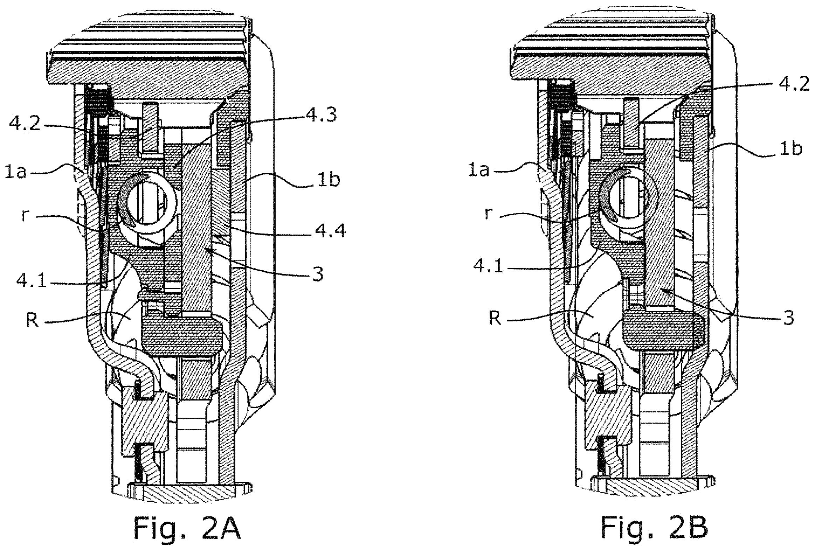

La figure 1 illustre l'assemblage traditionnel des divers éléments constitutifs d'un disque d'embrayage à friction pour véhicule automobile.
Cet assemblage comprend un disque 1 constitué de deux flasques en regard, respectivement d'entraînement 1a et d'appui 1b (appelés aussi rondelles de guidage), qui sont solidarisés l'un à l'autre en enfermant dans leur espace intercalaire, notamment, un moyeu central 2 et un amortisseur en torsion qui sera décrit en détail par la suite.
Le disque 1 porte des garnitures de friction périphériques G qui viennent, en position embrayée, en contact de pression avec le volant moteur du véhicule (non représenté).
Le disque 1 comprend différents autres éléments mécaniques que l'on retrouve habituellement dans un embrayage par friction et qui sont représentés sur la figure 1. Toutefois, certains de ces éléments qui ne participent pas directement à l'invention, ne sont pas repérés sur les figures et ne seront pas décrits explicitement par la suite.
Comme illustré par les figures 1 et 2A, les moyens amortisseurs comprennent généralement, un premier jeu de ressorts hélicoïdaux (ici quatre ressorts R) assurant l'amortissement principal dit de charge, logé dans le flasque 1a du disque 1 et, d'autre part, un second jeu de ressorts hélicoïdaux r (ici aussi au nombre de quatre), de plus faibles dimensions, formant les moyens dits pré-amortisseurs ou de faible charge.
Les ressorts r sont portés par un voile central 3 fixé à l'intérieur du disque 1.
Le jeu de ressorts r et le voile de support 3 coopèrent, d'une part, avec une série de rondelles coaxiales 4.1, 4.2 et 4.3 de guidage et/ou d'application qui sont montées entre les deux flasques 1a, 1b, à l'intérieur du disque 1 et en appui contre le voile 3, du côté opposé aux garnitures G et, d'autre part, avec une rondelle de frottement 4.4 placée du côté du flasque d'appui 1b et des garnitures G.

L'invention vise à perfectionner le disque et, plus particulièrement, ses moyens de friction interne en vue de réduire leur encombrement et, plus particulièrement leur largeur axiale. Cette démarche a pour but d'assurer des ajustements fiables et contrôlés de la liaison entre les garnitures et le volant moteur en vue d'adapter l'embrayage aux différentes spécifications des constructeurs.
Dans ce but, l'invention a consisté à modifier la composition du disque et la structure du voile de support des ressorts pré-amortisseurs r.
Les modifications susceptibles d'être apportées au voile, prises isolément ou en combinaison, vont être décrites de façon détaillée ci-après.

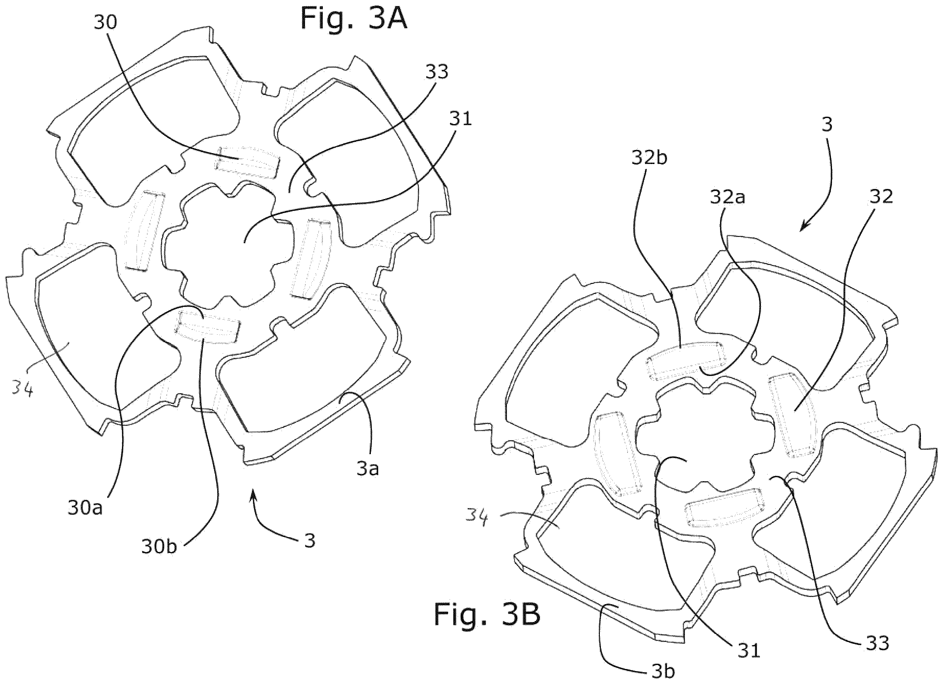

La figure 2B représente une demi-vue en coupe du disque 1 avec le perfectionnement selon l'invention et sur laquelle est représenté schématiquement le volant moteur V.
Cette figure est à rapprocher des vues de détail en perspective du voile 3 des figures 3A et 3B.

Selon l'invention, le voile central 3 central est pourvu, sur sa face 3b, de bossages 32 destinés à venir directement en contact de friction avec le flasque d'appui 1b du disque 1.

Le voile central 3 est pourvu d'autres cavités 34 aptes à recevoir les autres ressorts R. Les autres cavités 34 sont situées radialement à l'extérieur des bossages 32.Comme illustré par la figure 2B, l'invention permet de s'affranchir de l'utilisation de la rondelle de frottement 4.4 qui était montée entre le voile 3 et le flasque d'appui 1b du disque 1 du côté des garnitures G.

En effet, les bossages 32 sont capables d'assurer un contact de frottement approprié et au moins équivalent à celui de la rondelle 4.4 entre la face 3b du voile 3 et le flasque 1b en vis à vis, en lieu et place de la rondelle 4.4.

L'absence de la rondelle 4.4 qui était métallique, ne compromet ni la fiabilité, ni l'efficacité du disque 1 mais permet, en revanche, de réaliser un gain de poids significatif et une diminution notable de la largeur du disque 1 tout en améliorant sa compacité.

Dans le mode de réalisation représenté, les bossages 32 sont réalisés, de préférence, par emboutissage de la matière du voile 3 sur une zone circulaire 33 située radialement sur le plan intérieur du voile et autour de l'orifice axial 31 destiné à la fixation du moyeu 2.

Cette opération d'emboutissage qui est pratiquée sur la face 3a du voile en vis à vis du flasque d'entraînement 1a, crée des cavités 30 non traversantes qui permettent, avantageusement, de loger les ressorts hélicoïdaux r de pré-amortissement.
Les cavités 30 sont dimensionnées de façon à emprisonner intégralement des ressorts r d'environ 2 mm de diamètre dans la seule épaisseur du voile 3 en épousant au moins partiellement leur forme cylindrique.
Cette configuration permet de conserver au voile 3 une tenue mécanique suffisante.
Les bossages 32 présentent un bord intérieur 32a rectiligne, un bord extérieur 32b curviligne et une section transversale sensiblement tronconique.
Il est néanmoins possible de réaliser les bossages 32 avec une section pleine et/ou avec tout autre profil que celui qui est représenté sur les figures sans sortir du cadre de l'invention.

Dans les modes de réalisation représentés, les bossages 32 ont été réalisés par emboutissage de la matière du voile 3 sur la face 3a située en regard du flasque 1a du disque 1, du côté opposé aux garnitures G, en délimitant des cavités 30 sur cette face.

Dans une variante de réalisation préférentielle, les bossages 32 définissent une saillie d'environ 0,5 à 5 m mm sur la face opposée 3b, correspondant à la demi-section cylindrique des ressorts r. De préférence, les bossages 32 définissent une saillie de 3 mm qui est une dimension optimisée pour assurée l'interchangeabilité des système sd'hystérésis.

Il serait également possible, selon une variante non représentée, de réaliser les bossages 32 et/ou les cavités 30 par un usinage de la matière du voile 3, en prenant soin de de ne pas réduire son épaisseur de façon préjudiciable ou en prévoyant alors conjointement un apport local de matière pour compenser les pertes dues à l'usinage.

## Revendications

1. Disque d'embrayage formé de l'assemblage d'un flasque d'entraînement (1a) et d'un flasque d'appui (1b), d'un moyeu central (2) et de garnitures de friction périphériques (G) et à l'intérieur duquel est disposé au moins un amortisseur monté sur un voile central (3) de support, **caractérisé en ce que** ledit voile central (3) est pourvu, sur une de ses faces, d'au moins un bossage (32) destiné à venir directement en contact de friction avec le flasque d'appui (1b).

2. Disque d'embrayage selon la revendication 1, **caractérisé en ce que** ledit bossage (32) est réalisé par emboutissage de la face (3a) du voile (3) sur une zone circulaire (33) située radialement sur le plan intérieur du voile et autour du moyeu (2).

3. Disque d'embrayage selon l'une des revendications précédentes, **caractérisé en ce que** ledit bossage (32) est ménagé sur la face (3b) du voile (3) en regard du flasque d'appui (1b).

4. Disque d'embrayage selon l'une des revendications 1 à 3, **caractérisé en ce que** leditbossage (32) est réalisé dans l'épaisseur du voile (3).

5. Disque d'embrayage selon l'une des revendications précédentes, **caractérisé en ce que** ledit bossage (32) présente un bord intérieur (32a) rectiligne et un bord extérieur (32b) curviligne.

6. Disque d'embrayage selon l'une des revendications 1 à 4, **caractérisé en ce que** ledit bossage (32) présente un bord intérieur et un bord extérieur curvilignes.

7. Disque d'embrayage selon l'une des revendications précédentes, **caractérisé en ce que** ledit bossage (32) présente une section transversale tronconique.

8. Disque d'embrayage selon l'une des revendications précédentes, **caractérisé en ce que** ledit voile (3) comporte quatre bossages (32) dont la longueur angulaire est comprise entre 30° et 60°.

9. Disque d'embrayage selon l'une des revendications 1 à 7, **caractérisé en ce que** le voile (3) comporte un embouti circulaire au moins partiellement continu.

10. Disque d'embrayage selon l'une des revendications 1 à 9, **caractérisé en ce que** le voile (3) comporte des cavités aptes à recevoir des ressorts (R), lesdites cavités étant situées radialement à l'extérieur du ou des bossages.

11. Composant pour système de transmission d'un véhicule automobile, le composant étant notamment un embrayage à disque ou un convertisseur de couple hydrodynamique, comprenant un disque d'embrayage comme précédemment décrit.

## Patentansprüche

1. Kupplungsscheibe, welche von dem Zusammenbau eines Antriebsflansches (1a) und eines Stützflansches (1b), einer zentralen Nabe (2) und peripheren Reibbelägen (G) gebildet wird, und in deren Inneren mindestens ein Dämpfer angeordnet ist, welcher an einem mittleren Stützsteg (3) befestigt ist, **dadurch gekennzeichnet, dass** der mittlere Steg (3) an einer seiner Seiten mit mindestens einem Buckel (32) versehen ist, welcher dafür vorgesehen ist, direkt mit dem Stützflansch (1b) in Reibungskontakt zu kommen.

2. Kupplungsscheibe nach Anspruch 1, **dadurch gekennzeichnet, dass** der Buckel (32) durch Tiefziehen der Fläche (3a) des Stegs (3) an einem kreisförmigen Bereich (33), welcher radial über der inneren Ebene des Stegs und um die Nabe (2) herum angeordnet ist.

3. Kupplungsscheibe nach einem der vorhergehenden Ansprüche, **dadurch gekennzeichnet, dass** der Buckel (32) auf der dem Stützflansch (1b) zugewandten Fläche (3b) des Stegs (3) eingebracht ist.

4. Kupplungsscheibe nach einem der Ansprüche 1 bis 3, **dadurch gekennzeichnet, dass**
der Buckel (32) in der Dicke des Stegs (3) ausgeführt ist.

5. Kupplungsscheibe nach einem der vorhergehenden Ansprüche, **dadurch gekennzeichnet, dass** der Buckel (32) einen inneren, geraden Rand (32a) und einen äußeren, gekrümmten Rand (32b) aufweist.

6. Kupplungsscheibe nach einem der Ansprüche 1 bis 4, **dadurch gekennzeichnet, dass** der Buckel (32) einen inneren und äußeren, gekrümmten Rand aufweist.

7. Kupplungsscheibe nach einem der vorhergehenden Ansprüche, **dadurch gekennzeichnet, dass** der Buckel (32) einen kegelstumpfförmigen Querschnitt aufweist.

8. Kupplungsscheibe nach einem der vorhergehenden Ansprüche, **dadurch gekennzeichnet, dass** der Steg (3) vier Buckel (32) umfasst, deren Bogenlänge zwischen 30° und 60° liegt.

9. Kupplungsscheibe nach einem der Ansprüche 1 bis 7, **dadurch gekennzeichnet, dass** der Steg (3) eine zumindest teilweise kontinuierliche, kreisförmige Stanzung umfasst.

10. Kupplungsscheibe nach einem der Ansprüche 1 bis 9, **dadurch gekennzeichnet, dass** der Steg (3) Hohlräume umfasst, welche geeignet sind, Federn (R) aufzunehmen, wobei die Hohlräume radial außerhalb des oder der Buckel angeordnet sind.

11. Komponente für ein Antriebssystem eines Kraftfahrzeugs, wobei die Komponente insbesondere eine Scheibenkupplung oder ein hydrodynamischer Drehmomentwandler ist, welcher eine zuvor beschriebene Kupplungsscheibe umfasst.

## Claims

1. Clutch disc formed of the assembly of a drive plate (1a) and of a pressing plate (1b), of a central hub (2) and peripheral friction linings (G) and inside which there is placed at least one damper mounted on a central support web (3), **characterized in that** the said central web (3) is provided on one of its faces with at least one boss (32) intended to come into direct friction contact with the pressing plate (1b).

2. Clutch disc according to Claim 1, **characterized in that** the said boss (32) is produced by pressing the face (3a) of the web (3) in a circular zone (33) situated radially on the interior plane of the web and around the hub (2).

3. Clutch disc according to one of the preceding claims, **characterized in that** the said boss (32) is formed on the face (3b) of the web (3) facing the pressing plate (1b).

4. Clutch disc according to one of Claims 1 to 3, **characterized in that** the said boss (32) is produced in the thickness of the web (3).

5. Clutch disc according to one of the preceding claims, **characterized in that** the said boss (32) has a rectilinear interior edge (32a) and a curvilinear exterior edge (32b).

6. Clutch disc according to one of Claims 1 to 4, **characterized in that** the said boss (32) has a curvilinear interior edge and a curvilinear exterior edge.

7. Clutch disc according to one of the preceding claims, **characterized in that** the said boss (32) has a frustoconical cross section.

8. Clutch disc according to one of the preceding claims, **characterized in that** the said web (3) comprises four bosses (32), the angular length of which is comprised between 30° and 60°.

9. Clutch disc according to one of Claims 1 to 7, **characterized in that** the web (3) comprises an at least partially continuous circular pressing.

10. Clutch disc according to one of Claims 1 to 9, **characterized in that** the web (3) comprises cavities able to accommodate springs (R), the said cavities being situated radially on the outside of the boss or bosses.

11. Component for a motor vehicle transmission system, the component notably being a disc clutch or a hydrodynamic torque converter comprising a clutch disc as described hereinabove.
